# EUROPEAN PATENT APPLICATION

(11) **EP 1 659 472 A1**
(43) Date of publication of application: **24.05.2006**
(21) Application number: 04105984.1
(22) Date of filing: 22.11.2004
(51) Int. Cl.: G06F 1/00, G06F 12/14

(54) **Method and Device for Authenticating Software**

(71) Applicant: Research In Motion Limited, Waterloo, Ontario N2L 3W8 (CA)
(72) Inventor: Little, Herbert A., N2T 2V8, Waterloo, (CA); Hickey, Ryan J., N2L 6M2, Waterloo, (CA)
(74) Representative: Rickard, David John

(57) **Abstract**

A method and device for authenticating software stored in non-volatile memory in a data processing device. The processor comprises an internal immutable memory, preferably a read only memory (ROM), and during the boot up procedure the software in external memory is authenticated using code that is stored in the internal ROM. The on-chip ROM is physically integrated with the processor itself, so the code stored in ROM can neither be tampered with nor replaced, and can therefore be assumed at all times to be authentic. Thus, in the method and device of the invention known good code is used to authenticate the untrusted code in external memory, so the integrity of the system is significantly improved.

## Description

This invention relates to security in data processing systems. In particular, this invention relates to a method and device for the authentication of software stored in non-volatile memory.

The use of portable data processing systems has increased significantly in recent years. In addition to so called "laptop" and "tablet" computers, there is a growing popularity in handheld data processing devices, often called a "personal digital assistant" or "PDA." All of these devices are capable of storing a significant amount of user data, including calendar, address book, tasks and numerous other types of data for business and personal use. Most handheld data processing devices have the ability to connect to a personal computer for data exchange, and many are equipped for wireless communications using, for example, conventional email messaging systems.

Depending upon the user's needs much of this data can be highly sensitive in nature, especially for example in a government, military or commercial context. Accordingly, protection of the data in such a device is an important consideration. The integrity of a secure system relies entirely on the authenticity of its program code. It is possible to attack these types of systems by replacing the device's program code with malicious code. Thus, in any system that values security, when the embedded system boots up and the processor begins executing boot code, the boot code will immediately authenticate the software before executing any program code.

The fundamental deficiency in this method of software authentication is that the initial boot code is usually stored in off chip non-volatile memory and therefore cannot itself be trusted, because it is possible for an attacker to replace the non-volatile memory chip with another compatible chip containing malicious code.

It would accordingly be advantageous to provide a method of authenticating software in which the boot code that performs the authentication process can be guaranteed to be authentic. The authentication process itself can then be trusted, and the program code can be determined with certainty not to have been tampered with.

### Summary of the Invention

The present invention accordingly provides a method and apparatus for authenticating software stored in external non-volatile memory using a hardware mechanism before the software is allowed to run on the processor.

According to the method and apparatus of the invention, in the preferred embodiment of the invention, during the boot up procedure the code in external memory is authenticated using code that is stored in on-chip (internal) immutable memory, preferably a read only memory (ROM). The internal memory is physically integrated into the processor itself, so the code stored in the internal memory can neither be tampered with nor replaced, and can therefore be assumed at all times to be authentic. The public key needed for the authentication process is also stored in the internal memory.

In the preferred embodiment of the invention the boot procedure is as follows:
1) Following a reset signal (e.g. when the device is activated), rather than fetching instructions from an untrustworthy source such as an external NOR or NAND flash memory chip, the processor executes code read directly from the internal memory.
2) The code in the internal memory first runs a program that authenticates all or a portion of the external memory.
3) If the code is authenticated successfully using the public key stored in the internal memory, the authentication program jumps to code stored in external memory.
4) If the code authentication is unsuccessful, the program resets the processor. Where the external memory has been tampered with, this results in an endless resetting loop, thereby preventing malicious code from being executed.

The present invention thus provides a method of authenticating software in a data processing device comprising a data processor comprising at least one internal memory, the internal memory being immutable once programmed, and at least one external memory containing program software, comprising the steps of: a. issuing a reset signal to the processor; b. reading authentication code from the internal memory; c. executing the authentication code to authenticate at least a portion of the software in the external memory using a public key stored in the internal memory; and d. (i) if the software is authenticated successfully, reading and executing code stored in external memory; or (ii) if the software is not authenticated successfully, sending a reset signal to the processor.

The present invention further provides data processing device, comprising at least one external memory containing program software, and a data processor comprising at least one internal memory, the internal memory being immutable once programmed and comprising authentication code and a public key for authenticating the program software in the at least one external memory, whereby when the processor receives a reset signal the processor executes the authentication code to authenticate at least a portion of the software in the external memory, and if the software is authenticated successfully the processor reads and executes code stored in external memory, or if the software is not authenticated successfully a further reset signal is sent to the processor.

The present invention further provides a data processor comprising at least one internal memory, the internal memory being immutable once programmed and comprising authentication code and a public key for authenticating program software in at least one external memory, whereby when the processor receives a reset signal the processor executes the authentication code to authenticate at least a portion of the software in the external memory, and if the software is authenticated successfully the processor reads and executes code stored in external memory, or if the software is not authenticated successfully a further reset signal is sent to the processor.

### Brief Description of the Drawings

In drawings which illustrate by way of example only a preferred embodiment of the invention,
Figure 1 is a block diagram of a system overview of a conventional hand-held data processing device.
Figure 2 is a block diagram of a processor chip in the data processing device of Figure 1.

Figure 3 is a flow chart showing the boot procedure in the data processing device of Figure 1.

### Detailed Description of the Invention

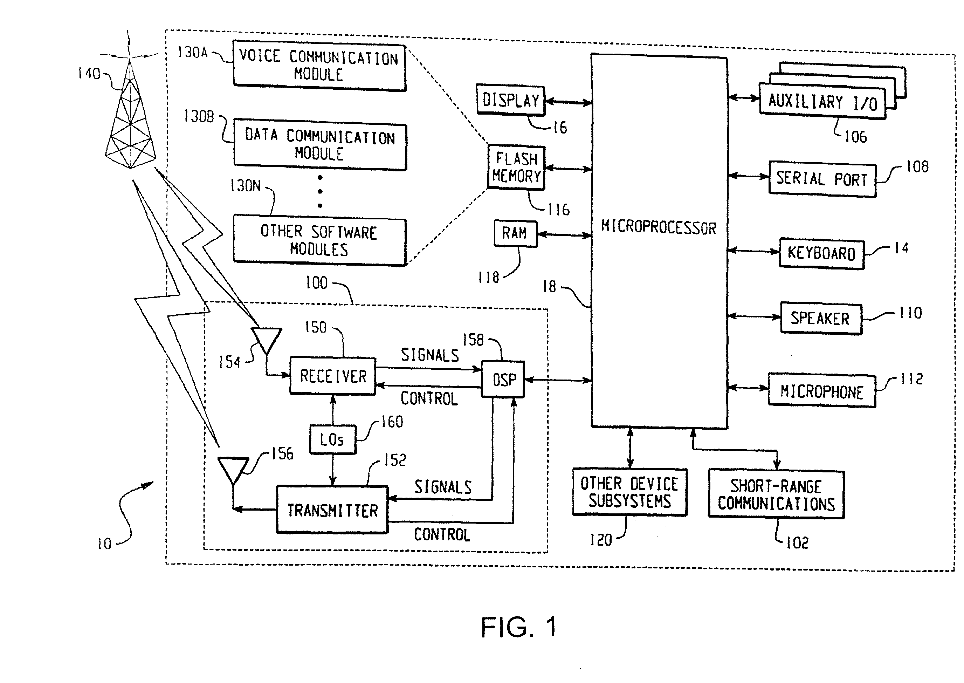

The invention will be described in detail below, by way of example only, in the context of a hand-held data processing device having wireless communications capabilities and a battery, as illustrated in Figure 1, in which a memory controller interface caches sectors out of non-volatile memory into volatile memory for processing, and writes modified data from volatile memory into non-volatile memory for more permanent storage. However, although the invention is particularly advantageous in the hand-held data processing device 10 of Figure 1, it will be appreciated that the principles of the system apply to other data processing devices and the system is not intended to be limited thereby.

The hand-held data processing devices 10 include a housing, a keyboard 14 and an output device 16. The output device shown is a display 16, which is preferably a full graphic LCD. Other types of output devices may alternatively be utilized. A processor 18, which is shown schematically in Figure 1, is contained within the housing and is coupled between the keyboard 14 and the display 16. The processor 18 controls the operation of the display 16, as well as the overall operation of the data processing device 10, in response to actuation of keys on the keyboard 14 by the user.

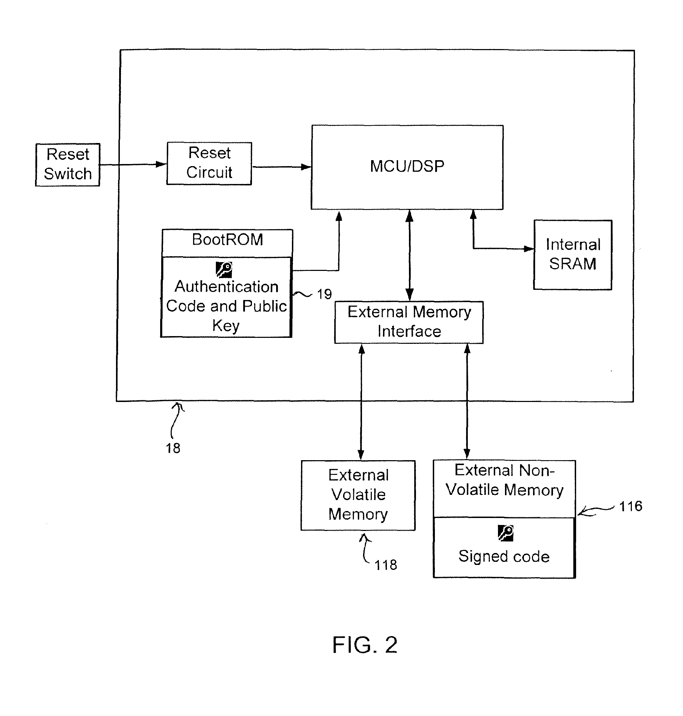

The housing may be elongated vertically, or may take on other sizes and shapes (including clamshell housing structures). The keyboard may include a mode selection key, or other hardware or software for switching between text entry and telephony entry. The housing contains the primary power supply, in the embodiment shown a battery 170 , a secondary power supply 180 (illustrated in Figure 2), which may be a small rechargeable battery or capacitor capable of sustaining power to the processor 18, NAND flash 116 and SDRAM 118 for the duration of an AutoSave interval and a Power Manager 190.

In addition to the processor 18, other parts of the data processing device 10 are shown schematically in Fig. 1. These include a communications subsystem 100; a short-range communications subsystem 102; the keyboard 14 and the display 16, along with other input/output devices 106, 108, 110 and 112; as well as memory devices 116, 118 and various other device subsystems 120. The data processing device 10 is preferably a two-way RF communication device having voice and data communication capabilities. In addition, the data processing device 10 preferably has the capability to communicate with other computer systems via the Internet.

Operating system software executed by the processor 18 is preferably stored in a persistent store, such as a flash memory 116, but may be stored in other types of memory devices, such as a read only memory (ROM) or similar storage element. In addition, system software, specific device applications, or parts thereof, may be temporarily loaded into a volatile store, such as a random access memory (RAM including also DRAM and SDRAM) 118. Communication signals received by the data processing device 10 may also be stored to the RAM 118.

The processor 18, in addition to its operating system functions, enables execution of software applications 130A-130N on the device 10. A predetermined set of applications that control basic device operations, such as data and voice communications 130A and 130B, may be installed on the device 10 during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network 140. Preferably, the PIM data items are seamlessly integrated, synchronized and updated via the wireless network 140 with the device user's corresponding data items stored or associated with a host computer system.

Communication functions, including data and voice communications, are performed through the communication subsystem 100, and possibly through the short-range communications subsystem. The communication subsystem 100 includes a receiver 150, a transmitter 152, and one or more antennas 154 and 156. In addition, the communication subsystem 100 also includes a processing module, such as a digital signal processor (DSP) 158, and local oscillators (LOs) 160. The specific design and implementation of the communication subsystem 100 is dependent upon the communication network in which the data processing device 10 is intended to operate. For example, a data processing device 10 may include a communication subsystem 100 designed to operate with the Mobitex™, Data TAC™ or General Packet Radio Service (GPRS) mobile data communication networks and also designed to operate with any of a variety of voice communication networks, such as AMPS, TDMA, CDMA, PCS, GSM, etc. Other types of data and voice networks, both separate and integrated, may also be utilized with the data processing device 10.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the data processing device 10 may send and receive communication signals over the communication network 140. Signals received from the communication network 140 by the antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 140 are processed (e.g. modulated and encoded) by the DSP 158 and are then provided to the transmitter 152 for digital to analog conversion, frequency up conversion, filtering, amplification and transmission to the communication network 140 (or networks) via the antenna 156.

In addition to processing communication signals, the DSP 158 provides for control of the receiver 150 and the transmitter 152. For example, gains applied to communication signals in the receiver 150 and transmitter 152 may be adaptively controlled through automatic gain control algorithms implemented in the DSP 158.

In a data communication mode, a received signal, such as a text message or web page download, is processed by the communication subsystem 100 and is input to the processor 18. The received signal is then further processed by the processor 18 for an output to the display 16, or alternatively to some other auxiliary I/O device 106. A device user may also compose data items, such as e-mail messages, using the keyboard 14 and/or some other auxiliary I/O device 106, such as a touchpad, a rocker switch, a thumb-wheel, or some other type of input device. The composed data items may then be transmitted over the communication network 140 via the communication subsystem 100.

In a voice communication mode, overall operation of the device is substantially similar to the data communication mode, except that received signals are output to a speaker 110, and signals for transmission are generated by a microphone 112. Alternative voice or audio I/O subsystems, such as a voice message recording subsystem, may also be implemented on the device 10. In addition, the display 16 may also be utilized in voice communication mode, for example to display the identity of a calling party, the duration of a voice call, or other voice call related information.

The short-range communications subsystem enables communication between the data processing device 10 and other proximate systems or devices, which need not necessarily be similar devices. For example, the short-range communications subsystem may include an infrared device and associated circuits and components, or a Bluetooth™ communication module to provide for communication with similarly-enabled systems and devices.

The device 10 embodying the invention, illustrated in Figure 2, authenticates software stored in an external memory such as non-volatile memory 116 (for example a NOR or NAND flash memory chip) using a internal authentication program, before any software from the memory 116 is executed by the processor 18. The processor comprises an internal immutable memory, preferably a read only memory (ROM) 19, which is physically integrated into the processor 18 when the processor's silicon die is fabricated.

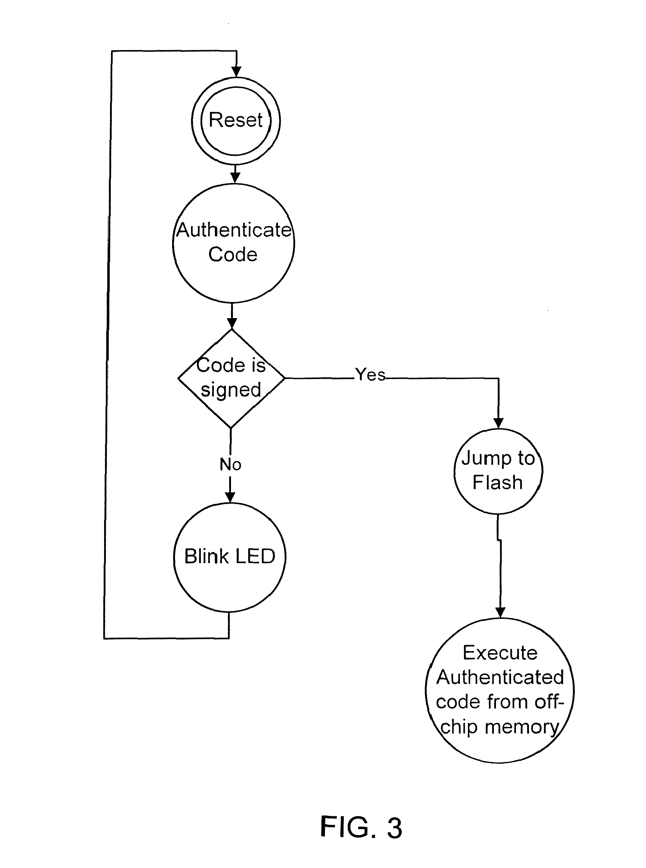

The internal ROM 19 contains the authentication code, including one or more public keys, required for authenticating the program software residing in external memory 116 in known fashion. The authentication process is initiated when a reset signal is sent to the processor 18 (for example when the device 10 is activated or restarted). This initiates the boot up procedure, illustrated in Figure 3, which in the preferred embodiment of the invention is as follows:
1) After the processor 18 receives the reset signal, rather than fetching instructions from an untrusted source (e.g. off-chip memory such as NOR flash 116), the processor 18 executes code read directly from its internal ROM 19.
2) The code in the processor's internal ROM 19 comprises a conventional software authentication program that authenticates all or a portion of the external memory 116 containing the program software for the device 10, which is executed by the processor 18 before any code from the external memory 116 is executed. The program software residing in external memory 116 may be authenticated in any conventional fashion, for example using a digital signature verification system such as "RSA," or any other suitable system, and preferably using a public key stored in the internal ROM 19.
3) If the processor 18 determines that the program software in the external memory 116 has been authenticated successfully, the processor 18 begins to fetch and execute program code stored in the external memory 116 to initiate the basic functions of the device 10.
4) If the processor 18 determines that the program software in the external memory 116 has not been authenticated successfully, the boot program causes another reset signal to be sent the processor 18. The boot routine thus repeats and again tries to authenticate the program software in the external memory 116. If the unsuccessful authentication attempt was merely due to an execution error, the program software will likely be authenticated on a subsequent execution of the authentication code. However, if the unsuccessful authentication attempt occurred because the external memory 116 had been tampered with, an endless resetting loop will result, thereby preventing malicious code from being executed by the processor 18.

The method and device of the invention thus ensures that the boot code performing the authentication process is guaranteed to be authentic. As an alternative, it is possible to stack the non-volatile memory 116 in the same package as the processor 18, on the assumption that there is no way for an attacker to modify the boot code stored in on-chip flash. However, authenticating the device's code using internal ROM 19 is more secure, since it is impossible to change the code stored in ROM without re-fabricating the silicon die itself. Accordingly, in the method and device of the invention trusted code is always used to authenticate the untrustworthy code in external memory, so the integrity of the system is significantly improved.

When authenticating the code in external memory such as flash memory 116, it is important to ensure the code is signed correctly. Several algorithms can be used to accomplish this. By way of example only, RSA is a good candidate since it runs quickly and has a small memory footprint. However, other authentication algorithms are available for this and the invention is not intended to be limited to any particular authentication means.

Although internal ROM 19 is preferred, other internal memory technologies that are immutable when in operation (i.e. once programmed), such as one time programmable flash could be used to hold the bootROM and public key(s). However, whatever type of memory is used, the internal bootROM code and public key(s) should be immutable once the device has been deployed so that they cannot be changed. Regular flash can be used if protected by hardware that secures a regular programmable flash memory to render it immutable once it has been written to, and a programmable flash memory so equipped would be immutable for purposes of the invention and thus suitable for use in the invention.

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A method of authenticating software in a data processing device comprising a data processor comprising at least one internal memory, the internal memory being immutable once programmed, and at least one external memory containing program software, comprising the steps of:
issuing a reset signal to the processor;
reading authentication code from the internal memory;
executing the authentication code to authenticate at least a portion of the software in the external memory using a public key stored in the internal memory; and
(i) if the software is authenticated successfully, reading and executing code stored in external memory; or
(ii) if the software is not authenticated successfully, sending a reset signal to the processor.

2. The method of claim 1 wherein the internal memory comprises a read only memory.

3. A data processing device, comprising
at least one external memory containing program software, and
a data processor comprising at least one internal memory, the internal memory being immutable once programmed and comprising authentication code means and a public key for authenticating the program software in the at least one external memory,
whereby when the processor receives a reset signal the processor executes the authentication code to authenticate at least a portion of the software in the external memory, and if the software is authenticated successfully the processor reads and executes code means stored in external memory, or if the software is not authenticated successfully a further reset signal is sent to the processor.

4. The device of claim 3 wherein the internal memory comprises a read only memory.

5. A data processor for the device of claim 3, wherein the internal memory comprises a one time programmable flash memory.

6. A computer readable medium comprising code means executable by the data processor of the device of claims 3 or 4 for implementing the method of claims 1 or 2.
